# EUROPEAN PATENT APPLICATION

(11) **EP 3 441 879 A1**
(43) Date of publication of application: **13.02.2019**
(21) Application number: 16897030.9
(22) Date of filing: 04.11.2016
(51) Int. Cl.: G06F 9/48, G06F 9/50

(54) **CONTROLLER APPARATUS AND TASK EXECUTION MANAGEMENT METHOD FOR CONTROLLER APPARATUS**

(30) Priority: 28.03.2016 JP 2016063034
(71) Applicant: Hitachi Industrial Equipment Systems Co., Ltd., Chiyoda-ku Tokyo 101-0022 (JP)
(72) Inventor: IMAI, Mitsuhiro, Tokyo 100-8280 (JP); HIRANA, Ryo, Tokyo 100-8280 (JP); TAMURA, Fumiyuki, Tokyo 101-0022 (JP)
(74) Representative: Mewburn Ellis LLP
(86) International application number: PCT/JP2016/082754
(87) International publication number: WO 2017/168814

(57) **Abstract**

Tasks having different priorities can be executed and a performance index can be output using a single microprocessor which executes one task at a time.

A controller (1) includes the single microprocessor which executes one task at a time, a first task execution unit (110) which is realized by the microprocessor and executes a first task set to a high priority, a second task execution unit (120) which is realized by the microprocessor and executes a second task set to a low priority, and a task management unit (130) which calculates an extra resource assignable to execution of the second task among calculation processing resources of the microprocessor, determines a performance index indicating an estimated value of performance of the second task in a case where the second task is executed using the calculated extra resource, and outputs the extra resource and the performance index.

## Description

### Technical Field

The present invention relates to a controller device and a task execution managing method of the controller device.

### Background Art

For example, in various facilities such as a power station, a factory, and a plant, actuators such as a power generator, a motor, a pump, and a heater, or sensors such as a temperature sensor, a pressure sensor, a voltmeter, and an ammeter are installed in a plurality. A controller device installed in a facility controls the actuators on the basis of signals from the sensors.

The controller device is also called a sequence control device or a programmable controller (PLC). The controller device controls operations of the actuator according to a content described using a sequence program language represented by a ladder language.

The controller device normally performs a sequence control in which all the processes are executed in a determined order. Therefore, the sequence control is not suitable for data processing which needs a complex arithmetic calculation. If the ladder language is used for a complex arithmetic calculation, a large workload is burdened on programming. Further, since a long period of time is consumed for the data processing compared to a sequence execution time, there is a possibility to affect immediacy of a sequence execution.

Then, PTL 1 discloses a technique in which, when reading an activation command, a sequence execution unit activates a data processing execution unit to execute a data processing program, and receives the calculation result to keep on the sequence control.

In addition, there is also known a technique of using a multi-core CPU and dividing a CPU core assigned to a process where a high immediacy is required such as the sequence control and a process where a high immediacy is not required such as a Human Machine Interface (HMI) process.

### Citation List

### Patent Literature

PTL 1: JP-A-9-274511

### Non-Patent Literature

NPL 1: Beckhoff Automation K.K., "Multi-core and Multi-tasking Support" [online] December 22, 2011, BECKHOFF Automation K.K. TwinCAT 3 Product Introduction Web page, [Searched on September 29, 2015], Internet <URL:http://www.beckhoff.co.jp/jp.asp?twincat/twincat-3-xa-performance.htm>

### Summary of Invention

### Technical Problem

In PTL 1, the sequence execution unit and the data processing execution unit each are executed using different microcomputers to realize data processing including a complex arithmetic calculation while keeping the immediacy of the sequence processing. However, in the controller devices used in various facilities such as a power station, a factory, and a plant, the controller device includes a so-called one-chip and single core CPU in many cases. In a microprocessor which can process only one task at a time, it is difficult to accommodate both of a high priority sequence processing and a low priority data processing.

In NPL 1, the multi-core CPU equipped with a plurality of cores is used. Therefore, similarly to PTL 1, both of a high priority sequence processing and a low priority HMI process can be accommodated. However, similarly to PTL 1, NPL 1 is not possible to be applied to the one-chip and single core CPU which is commonly used in a built-in device.

If the sequence processing and the data processing containing the complex arithmetic calculation is executed in the sequence control device equipped with the one-chip, single core CPU, there is no way for a user to know at which performance the data processing is performed.

The invention has been made in view of the above problems, and an object thereof is to provide a controller device and a task execution managing method of the controller device which can accommodate both of a high priority first task and a low priority second task executable using a single microprocessor which executes one task at a time, and also can output a performance index in a case where the second task is executed.

### Solution to Problem

To solve the above problems, according to the invention, there is provided a controller device which executes a plurality of tasks having different priorities. The controller device includes a single microprocessor which executes one task at a time, a first task execution unit which is realized by the microprocessor, and executes one or more first tasks set to a high priority, a second task execution unit which is realized by the microprocessor, and executes one or more second tasks set to a low priority, and a task management unit which calculates an extra resource assignable to execution of the second task among calculation processing resources of the microprocessor, determines a performance index indicating an estimated value of performance of the second task in a case where the second task is executed using the calculated extra resource, and outputs the extra resource and the performance index.

### Advantageous Effects of Invention

According to the invention, a high priority first task and a low priority second task can be executed by a single microprocessor which executes one task at a time. Further, an extra resource assignable to execution of the second task is calculated, so that a performance index in a case where the second task is executed can be output. With the configuration, it is possible to execute a plurality of tasks having different priorities, and to output the performance index in a case where the second task is executed.

### Brief Description of Drawings

[Fig. 1] Fig. 1 is an explanatory diagram illustrating the entire configuration of a control system which includes a controller.
[Fig. 2] Fig. 2 is a diagram illustrating a hardware configuration of the controller and a program distribution device.
[Fig. 3] Fig. 3 is a high priority task priority table which manages a priority when a high priority task is executed.
[Fig. 4] Fig. 4 is a BE task priority management table which is used to manage a priority of a best effort type task (BE task) .
[Fig. 5] Fig. 5 is a periodic task operation table which is used to manage an operation period and an execution time of a periodic task which is periodically executed.
[Fig. 6] Fig. 6 is a BE task performance index table which is used to manage a performance index of the BE task.
[Fig. 7] Fig. 7 is a BE task programmable performance index table which is used to manage the performance index and a corresponding CPU operating frequency which can be set in the BE task.
[Fig. 8] Fig. 8 is a BE task lowest operating performance index table which is used to manage a minimum performance index and a corresponding CPU operating frequency when the BE task operates.
[Fig. 9] Fig. 9 is a CPU operating frequency table which is used to manage an operating frequency of a CPU.
[Fig. 10] Fig. 10 is a CPU availability table which is used to manage an availability of the CPU.
[Fig. 11] Fig. 11 is a BE task operation state table which is used to manage an operation state of the BE task.
[Fig. 12] Fig. 12 illustrates an example of a scheduling operation of a CPU resource to an interrupt task and the periodic task by a task scheduler of the controller.
[Fig. 13] Fig. 13 is a flowchart illustrating a process of calculating and memorizing a CPU availability.
[Fig. 14] Fig. 14 is a flowchart of determining whether the BE task on standby is allowed to be executed.
[Fig. 15] Fig. 15 is a flowchart of determining a performance index which can be set for the BE task.
[Fig. 16] Fig. 16 is a flowchart of calculating a CPU operating frequency at which the BE task is executable additionally.
[Fig. 17] Fig. 17 is a BE task operation setting screen through which an operation of the BE task is set.
[Fig. 18] Fig. 18 is a flowchart of creating the BE task operation setting screen.
[Fig. 19] Fig. 19 is a flowchart of installing the BE task from the program distribution device to the controller.
[Fig. 20] Fig. 20 is an explanatory diagram illustrating some methods of setting a parameter of a task according to a second embodiment.
[Fig. 21] Fig. 21 is a BE task operation setting screen according to a third embodiment.
[Fig. 22] Fig. 22 is a flowchart illustrating an interaction between the high priority task and the BE task according to a fourth embodiment on the basis of an execution result therebetween.

### Description of Embodiments

Hereinbelow, embodiments of the invention will be described on the basis of the drawings. A control system according to the embodiment includes a controller device and a program distribution device. The controller device includes a single microprocessor which executes one task at a time. The controller device executes a first task having a high priority and a second task having a low priority by the single microprocessor.

The first task is, for example, a high priority task which requires a high immediacy such as a sequence control used in various types of control systems such as a power station, a factory, a railway, a plant, and an elevator system. Hereinbelow, the first task will be called a high priority task. On the contrary, the second task is a task of a best effort type such as data processing which is performed between sequence controls and contains a complex arithmetic operation. Hereinbelow, the second task will be called a BE task. The BE task is executed at a maximum performance using a spare time between a certain high priority task and another high priority task.

Since the BE task is a task of the best effort type, a performance at the time of execution is not ensured. Therefore, in normal cases, a user of the controller device cannot know at which performance the BE task is executed. However, in the embodiment, it is possible to estimate the performance of the BE task at the time of execution and to output the estimated performance. Therefore, the user is able to easily check at which performance the BE task is executed, and thus convenience is improved.

In the embodiment, a guidance of the CPU operating frequency at which the BE task is executable is calculated on the basis of a CPU operating frequency and a CPU utilization rate of a periodic task. Further, in the embodiment, a performance index which can be converted from the CPU operating frequency is changed into a unit and a value suitable to the BE task, and presented to the user. The unit and the value suitable to the BE task mean that these values are suitable to properties of a processing content of the BE task. For example, in a case of the BE task which analyzes log information during a predetermined period of time, "time" required for the analysis of the log information is employed as the performance index. For example, in a case of the BE task which manages an operation state of a device, the "number" of managing target devices is employed as the performance index. For example, in a case of the BE task which periodically measures a change in a certain physical state, a sampling "frequency" is employed as the performance index. For example, in a case of the BE task which analyzes an image of a monitor camera, "frame rate" indicating the number of pieces of image data to be analyzed in a predetermined period of time is employed. The above description is given as an example of the performance index of the BE task, and the embodiment is not limited to the above examples.

A controller device 1 according to the embodiment stores a table 143 which relates to periods and average execution times of one or a plurality of periodic tasks as described below, and a table 147 which relates to an operating frequency of a microprocessor 11.

The controller device 1 includes means (S40 to S42) which calculate a CPU availability from a sum of the period and the average execution time of each periodic task, and a CPU operating frequency of the controller device 1. The CPU availability indicates that the periodic task does not use the CPU in a case where an interrupt task does not occur. A CPU resource corresponds to a "calculation processing resource", and the CPU availability corresponds to an "extra resource".

In the embodiment, the CPU availability is used as a guidance of an available CPU resource of the BE task. The embodiment provides the user of the controller device with a guidance showing that the BE task is possible to operate at a certain degree of performance. However, the performance index provided to the user is merely one guidance, but the controller device 1 does not ensure the performance presented to the user.

In the embodiment, for example, the performance of the BE task converted by a CPU resource amount (CPU operating frequency, CPU usage rate) is provided as the user-understandable indexes such as a calculation time, the number, a sampling frequency, and a frame rate. The controller device 1 includes a table 144 which is used to manage the performance index of each BE task, a table 146 which is used to manage the performance index necessary for each BE task to operate at a minimum performance, and a table 145 which relates to a programmable performance index of each BE task.

The user can simply set the CPU resource available to each BE task using the performance index which is easy to be understood such as the calculation time and the frame rate. Each BE task is executed while consuming the CPU resource corresponding to the performance index which is set by the user.

In the embodiment, there is provided with a program distribution device 2 which is used to distribute the BE task to the controller device 1. The program distribution device 2 transmits the BE task which is requested from the user, or the BE task which is requested by the automatic determination of the controller device 1 to the controller device 1 through a communication network CN1. The program distribution device 2 includes master information 232 of the performance index which can be set in each BE task, and a task distribution management unit 210 which manages a distribution of the BE task. The program distribution device 2 distributes information of the performance index which can be set in the BE task together when the BE task is distributed to the controller device 1.

In the embodiment configured as above, the BE task can be executed at a maximum performance using the spare time when the high priority task including the periodic task or the interrupt task does not use the CPU. Further, in the embodiment, a guidance of the performance index of the BE task is presented to the user. In the embodiment, the user can simply set the operation and the performance index of the BE task using a Graphical User Interface (GUI).

### [First Embodiment]

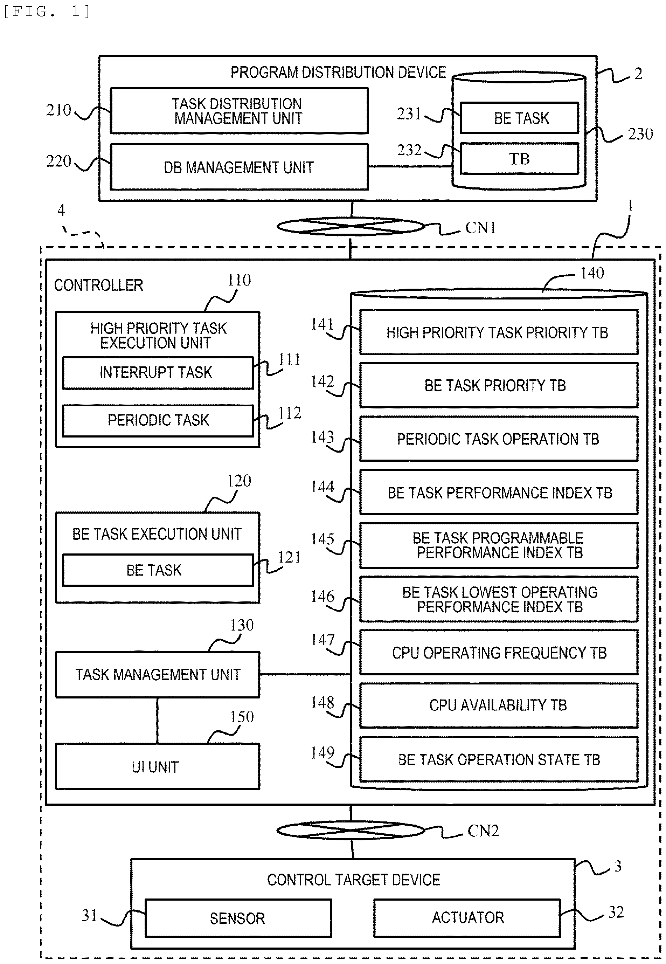

A first embodiment will be described using Figs. 1 to 18. Fig. 1 illustrates an exemplary functional configuration of the entire control system.

The control system is used to control various types of facilities 4 such as a power station, a factory, a plant, an elevator system, a railway system, a water and sewage system, and a building air conditioning system. The control system includes at least one controller 1, at least one program distribution device 2, and at least one control target device 3. The controller 1 corresponds to a "controller device". A plurality of controllers 1 may be installed in the facility 4. Each controller 1 can put a plurality of control target devices 3 under the management. The program distribution device 2 is connected to each controller 1 in the same facility 4, and may also be connected to the controller 1 which is installed in other facilities on the outside of the drawing.

The connection configuration will be described. The program distribution device 2 and the controller 1 are connected to be capable of a bidirectional communication through the communication network CN1. The communication network CN1 is configured to include, for example, a private network such as an intranet, a closed network using an optical communication, a dedicated line, or the Internet. The communication network CN1 may perform communication in a wired or wireless manner.

In the facility 4, the controller 1 and the control target device 3 are connected to be communicable with each other through a control network CN2. The controller 1 and the control target device 3 are connected to the control network CN2 through, for example, a LAN (Local Area Network) cable, an RS-485 cable, an RS-232C cable, a wired line such as a dedicated bus, or a wireless manner, and exchanges information in a predetermined procedure.

In the control target device 3, a sensor 31 and an actuator 32 are included. The sensor 31 include, for example, a manual switch, a relay, a photoelectric switch, a proximity switch, a limit switch, a gravimeter, a temperature sensor, a pressure sensor, a vibration sensor, a sonic wave sensor, a flow meter, a flow velocimeter, a gas sensor, a speed sensor, a tachometer, an ammeter, a voltmeter, a power meter, a water quality sensor, a color discriminating sensor, and a camera. The actuator 32 includes, for example, a motor, a power generator, a heater, a control valve, a cylinder, a solenoid, a lamp, an indicator, a buzzer, a speaker, a pump, a compressor, an air conditioner, a refrigerator, and a conveyor belt.

A functional configuration of the controller 1 will be described. The controller 1 includes, for example, a high priority task execution unit 110, a BE task execution unit 120, a task management unit 130, a memory unit 140, and a user interface unit 150.

The high priority task execution unit 110 corresponds to a "first task execution unit". The high priority task execution unit 110 executes an interrupt task 111 and a periodic task 112 as a "first task". The interrupt task 111 is a task which is executed by an interrupt which occurs when a predetermined event is detected. The periodic task 112 is a task which is periodically executed. However, an execution period of the periodic task 112 is not always fixed. The period may vary within a certain time width. The high priority task is a task to control the control target device 3, and is required to have a high immediacy in the control processing. Therefore, the high priority task is assigned with a priority higher than the BE task.

The BE task execution unit 120 corresponds to a "second task execution unit". The BE task execution unit 120 executes a BE task 121 as a "second task". Examples of the BE task 121 include a process of analyzing the log information to create learning data necessary for a symptom of a failure, a process of diagnosing a symptom of a failure from a sensor signal, a process of diagnosing a state from a mechanical vibration, and a process of analyzing image data. Since the BE task does not require immediacy unlike the high priority task, the BE task is executed using a spare time (idle time) when the high priority task is not executed. The BE task is a so-called best effort type of task which is executed in an available range if the execution is possible, and thus is assigned with a priority lower than the high priority task.

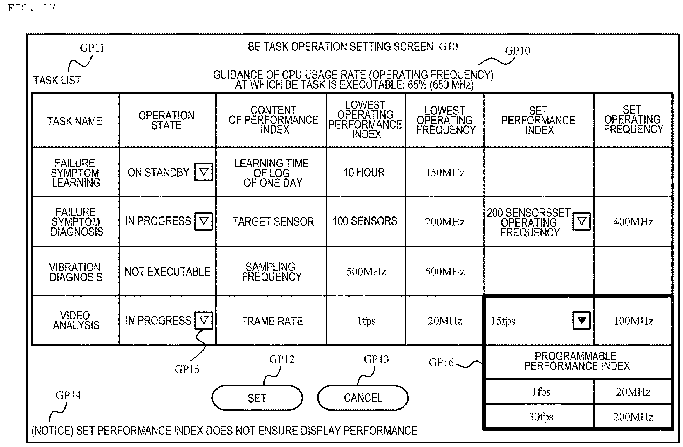

The task management unit 130 manages the high priority task and the BE task. The task management unit 130 manages contents of the respective management tables 141 to 149 which are memorized in the memory unit 140 so as to manage the high priority task and the BE task. Further, the task management unit 130 presents a screen G10 (to be described later using Fig. 17) to set an operation of the BE task to the user through the user interface unit 150. The task management unit 130 changes a parameter of the BE task in accordance with a user's instruction which is input from the BE task operation setting screen G10.

The memory unit 140 stores the plurality of tables 141 to 149 which are necessary for managing the high priority task and the BE task. The memory unit 140 stores, for example, a high priority task priority table 141, a BE task priority table 142, a periodic task operation table 143, a BE task performance index table 144, a BE task programmable performance index table 145, a BE task lowest operating performance index table 146, a CPU operating frequency table 147, a CPU availability table 148, and a BE task operation state table 149. The respective tables will be described below in detail.

The user interface unit (UI unit in the drawing) 150 serves to exchange information between the user of the controller 1 and the controller 1. In the embodiment, the description will be given about a case where the controller 1 exchanges information with the user using the user interface unit 150 in the controller 1. The configuration is not limited thereto, and the user and the controller may exchange information by communication between a user terminal of the user and the controller 1.

A functional configuration of the program distribution device 2 will be described. The program distribution device 2 is a computer which distributes the BE task with respect to the respective controllers 1 in the facility 4. The program distribution device 2 includes, for example, the task distribution management unit 210, a database management unit 220, and a memory unit 230.

When receiving a request from the user through the controller 1, the task distribution management unit 210 transmits the instructed BE task to the task management unit 130 of the controller 1. The database management unit 220 manages each BE task 231 and a table 232 memorized in the memory unit 230. Further, the task distribution management unit 210 may be configured to transmit the BE task which is automatically determined to be necessary by the controller 1 to the task management unit 130 according to the request from the controller 1.

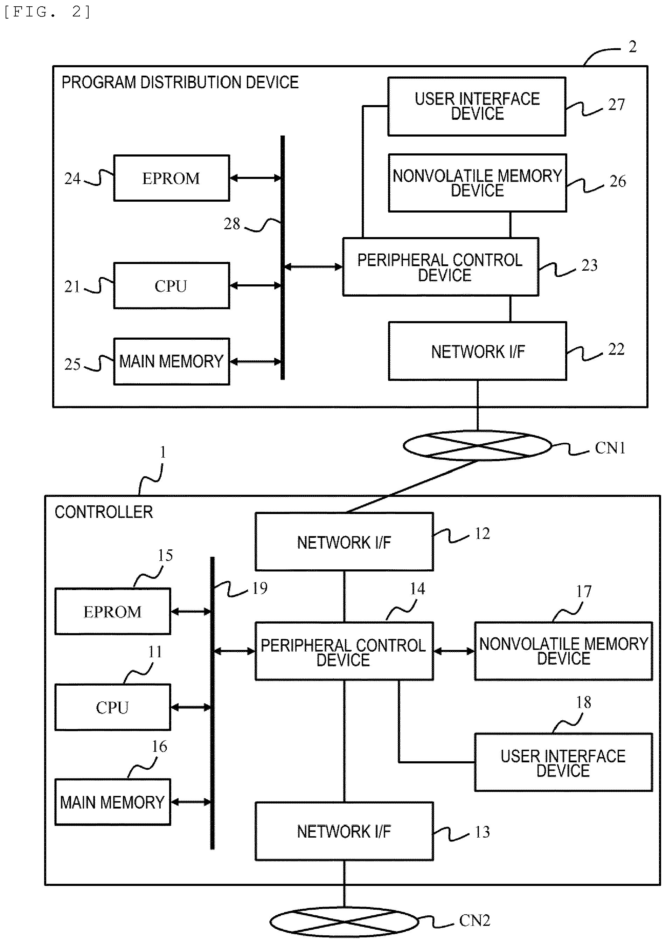

Fig. 2 illustrates a hardware configuration of the controller 1 and the program distribution device 2. First, the description will start with the controller 1. The controller 1 includes, for example, the microprocessor (the CPU in the drawing) 11, network interfaces 12 and 13, a peripheral control device 14, and an Erasable Programmable Read Only Memory (EPROM) 15, a main memory 16, a nonvolatile memory device 17, and a user interface device 18. The respective devices 11, 12, 15, and 16 are connected to each other by a bus 19. Hereinbelow, the interface may be abbreviated to "I/F". The network I/Fs 12 and 13, the nonvolatile memory device 17, and the user interface device 18 are connected to the bus 19 through the peripheral control device 14.

The microprocessor 11 realizes the functions 110 to 130 described using Fig. 1 by executing a computer program memorized in the EPROM 15, for example.

The network I/F 12 is connected to the communication network CN1 to communicate. The network I/F 13 is connected to the control network CN2 to communicate.

The nonvolatile memory device 17 is configured as a memory device such as a Hard Disk Drive (HDD) and a Solid State Drive (SSD), for example. The nonvolatile memory device 17 memorizes an operating system and various types of computer programs. The memory unit 140 described using Fig. 1 is realized by the nonvolatile memory device 17, but the invention is not limited thereto. For example, the memory unit 140 may be realized by any one or more of the EPROM 15, the main memory 16, and the nonvolatile memory device 17. At least some of the computer programs and files may be memorized in the EPROM 15. The computer program memorized in the nonvolatile memory device 17 or the EPROM 15 is developed in the main memory 16, and executed by the CPU 11.

The user interface device 18 includes an information input device with which the user inputs an instruction to the controller 1, and an information output device with which the controller 1 provides the information for the user. Examples of the information input device include a keyboard, a touch panel, a mouse, and a voice input device. Examples of the information output device include a display, a voice synthesizing device, a speaker, and a printer.

The configuration of the program distribution device 2 will be described. The program distribution device 2 includes, for example, a microprocessor 21, a network I/F 22, a peripheral control device 23, an EPROM 24, a main memory 25, a nonvolatile memory device 26, and a user interface device 27. The microprocessor 21, the main memory 25, the EPROM 24, and the peripheral control device 23 are connected to each other through a bus 28. The network I/F 22, the nonvolatile memory device 26, and the user interface device 27 are connected to the bus 28 through the peripheral control device 23.

When the computer program memorized in the nonvolatile memory device 26 or the EPROM 24 is transferred to the main memory 25, and developed onto the main memory 25, the microprocessor 21 reads and executes the computer program. With this configuration, the functions of the task distribution management unit 210 and the database management unit 220 described using Fig. 1 are realized.

The network I/F 22 is connected to the communication network CN1 to communicate. The user interface device 27 is used for a system manager to exchange information with the program distribution device 2. Further, the BE task can also be memorized in the program distribution device 2 through the communication network CN1 or a memory medium.

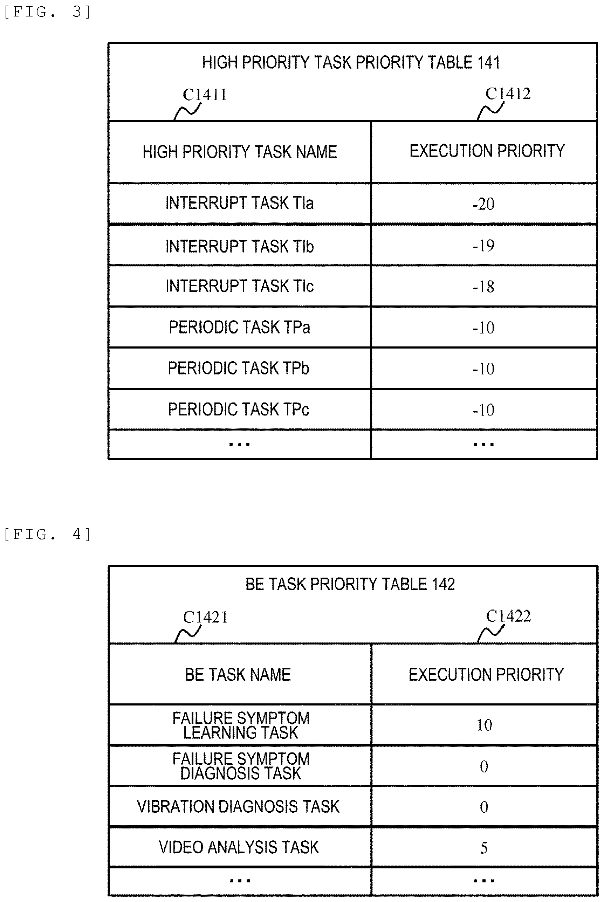

Fig. 3 illustrates a configuration of the table 141 which is used to manage a priority of the high priority task. The high priority task priority table 141 is stored in the controller 1.

The table 141 manages, for example, a high priority task name C1411 and an execution priority C1412 in correspondence with each other. The high priority task name C1411 is a name for identifying the respective interrupt tasks and the respective periodic tasks which are the high priority task. The execution priority C1412 corresponds to a "high priority".

Herein, a lower-valued task in the priority C1412 indicates a higher priority. When a higher priority task is activated in progress of executing a low priority task, a task scheduler of the operating system assigns a resource of the CPU 11 to the higher priority task. As the operating system built in the controller 1, for example, there are Linux (registered trademark) or iTRON. Further, in a case where the tasks have the same priority, the task scheduler evenly assigns the CPU resource (computer resource).

Fig. 4 illustrates the table 142 which is used to manage a priority of the BE task. The BE task priority table 142 is stored in the controller 1. The BE task priority table 142 manages, for example, a BE task name C1421 and an execution priority C1422 in correspondence with each other. The BE task name C1421 is a name for identifying the BE task. The execution priority C1422 corresponds to a "low priority". As described above, a low value represents a high priority. In the embodiment, a negative value is set to the high priority task, and a positive value (herein, including "0") is set to the BE task. Therefore, the priority of the BE task is lower than the priority of the high priority task.

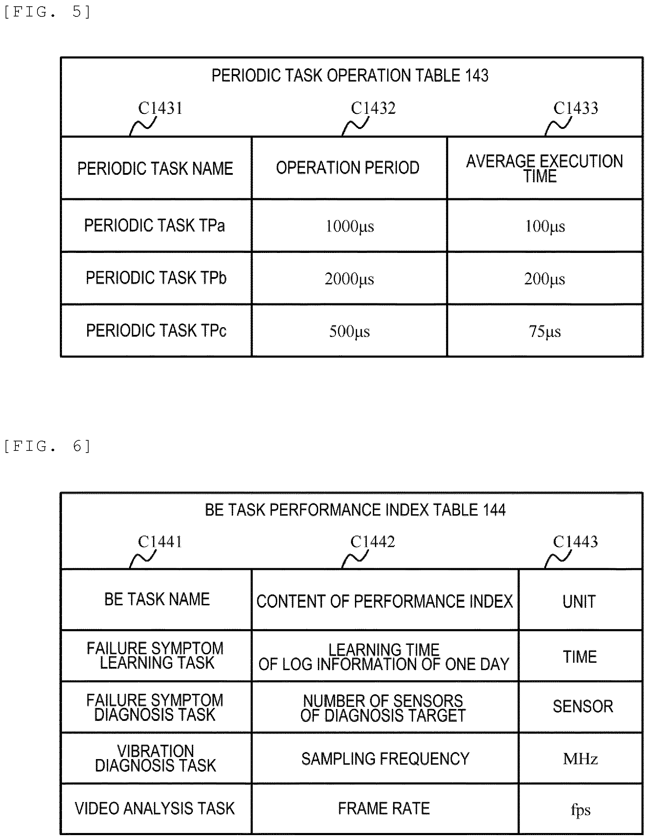

Fig. 5 illustrates the table 143 which is used to manage an operation of the periodic task. The periodic task operation table 143 is stored in the controller 1. The periodic task operation table 143 manages, for example, a periodic task name C1431, an operation period C1432, and an average execution time C1433 in correspondence with each other.

The periodic task name C1431 is a name for identifying the periodic task. The operation period C1432 is a period that the periodic task is executed. The average execution time C1433 is an average value of time taken for executing the periodic task one time. The average execution time C1433 may be updated by the controller 1 from a past operation history to a latest value. Alternatively, as the following embodiment, the average execution time may be set on the basis of a recorded value indicating an operation of the other controller 1.

Fig. 6 illustrates the table 144 which is used to manage the performance index of the BE task. The BE task performance index table 144 is stored in the controller 1. The table 144 manages, for example, a BE task name C1441, a content C1442 of the performance index, and a unit C1443 of the performance index in correspondence with each other.

The BE task name C1441 is a name for identifying the BE task. The content C1442 of the performance index indicates a specific content of the performance index which is set in each BE task. The unit C1443 is a unit of the performance index. The performance index is set in accordance with the nature of the BE task. For example, in the BE task which predicts and learns a failure, learning data obtained by analyzing the log information of one day is used as the performance index. The unit of the performance index is "time". In the BE task which diagnoses a symptom of a failure, the number of sensors which are diagnosis targets of failure prediction is set as the performance index. The unit of the performance index is "the number of sensors". In the BE task which diagnoses vibrations, a sampling frequency to detect the vibrations is set as the performance index. The unit of the performance index is "frequency". In the BE task which analyzes image data, a frame rate which is analysis speed of the image data is set as the performance index. The unit of the performance index is "fps".

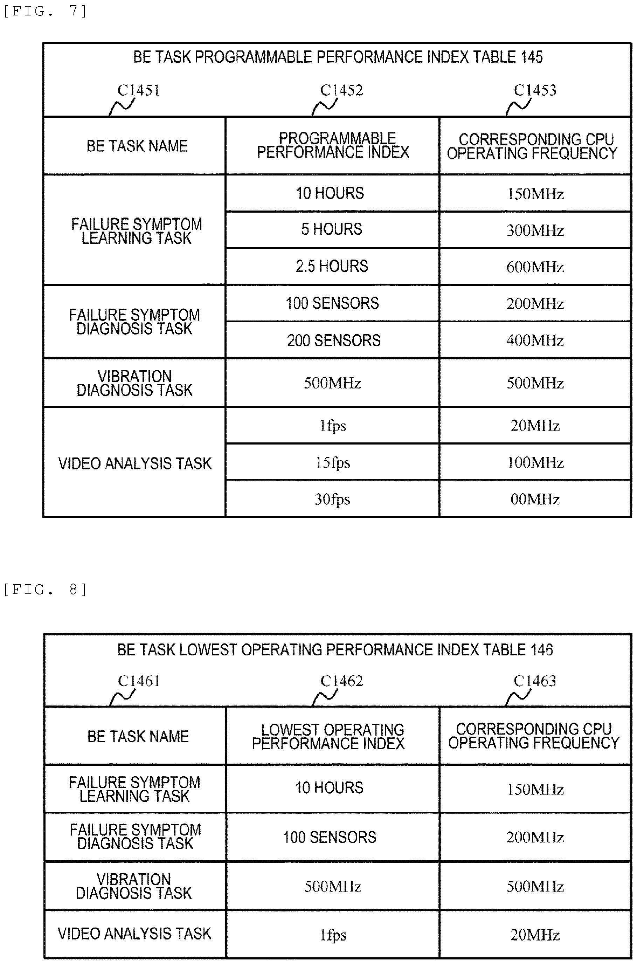

Fig. 7 illustrates the table 145 which is used to manage the performance index which can be set in the BE task. The table 145 is stored in the controller 1. The BE task programmable performance index table 145 manages, for example, a BE task name C1451, a programmable performance index C1452, and a corresponding CPU operating frequency C1453 in correspondence with each other.

The BE task name C1451 is a name for identifying the BE task. The programmable performance index C1452 indicates the performance index which can be set in the BE task. The corresponding CPU operating frequency C1453 is a CPU operating frequency which corresponds to each programmable performance index. As the performance index to be set in the BE task is increased, the CPU operating frequency required to realize the performance index is also increased. In a case where the CPU usage rate is used instead of the CPU operating frequency, the required CPU usage rate becomes large as the performance index is increased.

Herein, the BE task programmable performance index table 145 stored in the controller 1 is a part of a BE task programmable performance index master table 232 stored in the program distribution device 2. In other words, the program distribution device 2 manages all the performance indexes which can be set in each registered BE task using the master table 232. When the BE task is distributed from the program distribution device 2 to the controller 1, a list of the performance indexes which can be set in the BE task is also distributed together. The controller 1 registers and stores the BE task received from the program distribution device 2 and the programmable performance index to the table 145. A basic configuration of the master table 232 which is stored in the program distribution device 2 is similar to that of the BE task programmable performance index table 145 illustrated in Fig. 7, and thus will be omitted in the drawing.

Fig. 8 is the table 146 which is used to manage the performance index when the BE task operates at a lowest performance. The table 146 is stored in the controller 1. The BE task lowest operating performance index table 146 manages, for example, a BE task name C1461, a lowest operating performance index C1462, a corresponding CPU operating frequency C1463 in correspondence with each other.

The BE task name C1461 is a name for identifying the BE task. The lowest operating performance index C1462 indicates a lowest performance index when the BE task operates. The BE task is not possible to be executed at a performance lower than the lowest operating performance index. The corresponding CPU operating frequency C1463 is a CPU operating frequency which is required in a case where the BE task is executed with the lowest operating performance index. As described above, the CPU usage rate may be used instead of the CPU operating frequency.

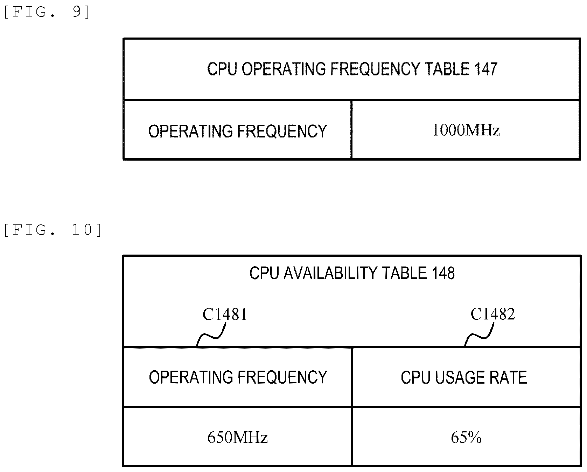

Fig. 9 illustrates the table 147 which is used to manage the CPU operating frequency. The table 147 is stored in the controller 1. The CPU operating frequency table 147 memorizes a maximum operating frequency of the CPU 11.

Fig. 10 illustrates the table 148 which is used to manage an availability of the CPU 11. The table 148 is stored in the controller 1. The CPU availability table 148 manages, for example, an operating frequency C1481 and a CPU usage rate C1482 in correspondence with each other.

The operating frequency C1481 is a current operating frequency of the CPU 11. The CPU usage rate C1482 is a current usage rate of the CPU 11. For example, in a case where the maximum operating frequency of the CPU 11 is 1,000 MHz and the current operating frequency is 650 MHz, the CPU 11 is available by the operating frequency of 350 MHz. In a case where the current usage rate of the CPU 11 is 65%, the CPU 11 is available by 35%, that is, there is a margin in calculation processing.

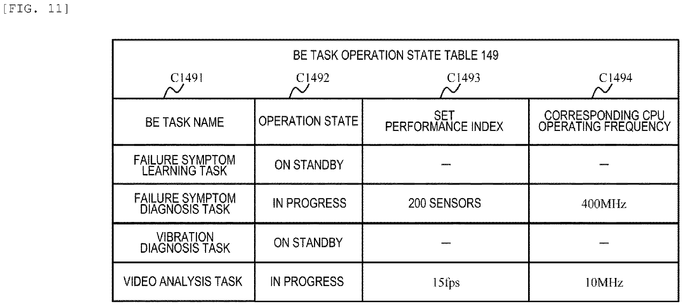

Fig. 11 is the table 149 which is used to manage an operation state of the BE task. The table 149 is stored in the controller 1. The BE task operation state table 149 manages, for example, a BE task name C1491, an operation state C1492, a set performance index C1493, and a corresponding CPU operating frequency C1494 in correspondence with each other.

The BE task name C1491 is a name for identifying the BE task. The operation state C1492 indicates a current operation state of the BE task. As a value of the operation state, for example, there are "in progress" and "on standby". The set performance index C1493 indicates the performance index which is set in the BE task. The BE task is executed toward the set performance index. However, since the task is the best effort type of task, the set performance index merely means one guidance or an expected or estimated performance. Therefore, the BE task is not always executed according to the set performance index. The corresponding CPU operating frequency C1494 is an operating frequency of the CPU 11 corresponding to the set performance index.

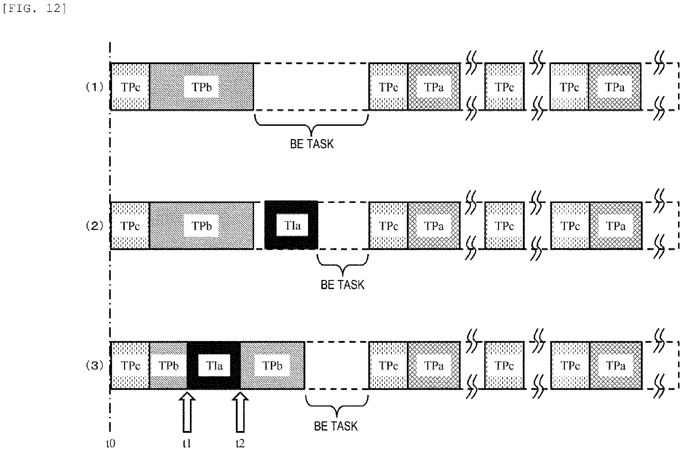

Fig. 12 illustrates a state where the resource of the CPU 11 is assigned to the task. The task scheduler of the controller 1 schedules the assignment of the CPU resource with respect to the interrupt task and the periodic task.

(1) of Fig. 12 illustrates a case where the interrupt task does not occur. (2) of Fig. 12 illustrates a case where an interrupt task (TIa) occurs in a spare time between a periodic task (TPb) and a periodic task (TPc). (3) of Fig. 12 illustrates a case where the interrupt task (TIa) occurs in progress of the periodic task (TPb).

As illustrated in (1) of Fig. 12, in a case where the interrupt task does not occur, the task scheduler assigns the CPU resource to the respective periodic tasks (TPa), (TPb), and (TPc) according to the information of the high priority task priority table 141. In a case where the priorities of these periodic tasks (TPa), (TPb), and (TPc) are equal to each other, the task scheduler evenly assigns the CPU resource. The task scheduler evenly assigns the CPU resource such that the execution times of the respective periodic tasks (TPa), (TPb), and (TPc) are not overlapped.

In (2) of Fig. 12, the interrupt task (TIa) occurs and is executed in an available time between the periodic task (TPb) and the periodic task (TPc). Since the time is originally available, the execution times of the respective periodic tasks (TPa), (TPb), and (TPc) are not changed. The periodic tasks (TPa), (TPb), and (TPc) are executed at the same timing and the same time as (1) of Fig. 12.

In (3) of Fig. 12, the interrupt task (TIa) occurs in progress of executing the periodic task (TPb). As described above, the priority of the interrupt task is set to be higher than the priority of the periodic task. Therefore, the task scheduler temporarily suspends the process of the periodic task (TPb), and executes the interrupt task (TIa) in the suspended time zone (t1 - t2).

The description will be given about a case where the BE task operates in the situation of Fig. 12. The priority of the BE task is lower than the priority of the high priority task. Therefore, the task scheduler does not assign the CPU resource to the BE task in progress of executing the interrupt task and the periodic task. The task scheduler assigns the CPU resource to the BE task in a period of time when the periodic task and the interrupt task both are not executed. In Fig. 12, part of time when the BE task is executable is depicted by a dotted line.

In the embodiment, the task management unit 130 calculates the CPU resource which can be assigned to the BE task as follows.

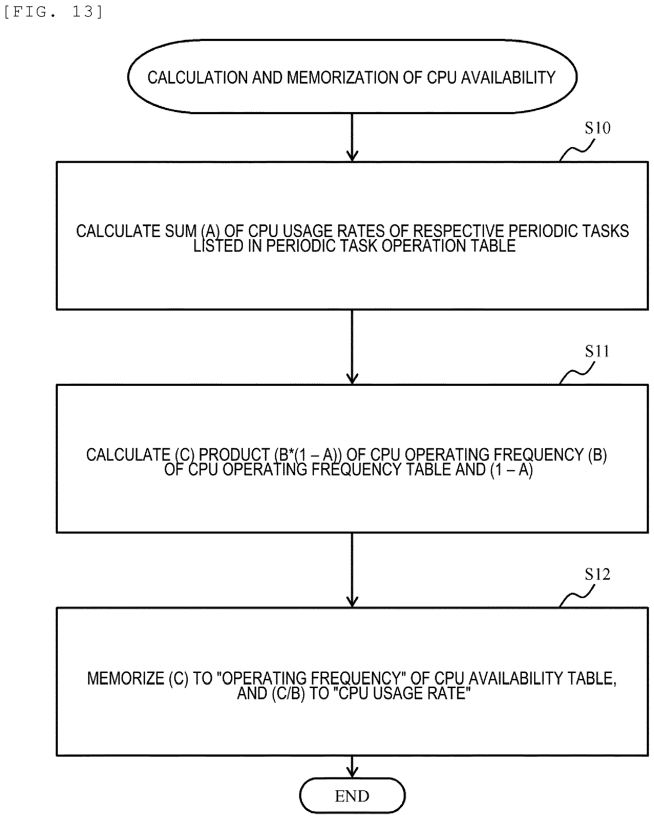

Fig. 13 is a flowchart of a process of calculating and memorizing an availability of the CPU 11. For example, the process is executed at the time of activating the controller 1, and at the time of creating the BE task operation setting screen G10 to be described using Fig. 17. An execution subject of the process is the task management unit 130, but the description will be given with the controller 1 as the execution subject.

The controller 1 first calculates a sum (value A) of the CPU usage rates of the respective periodic tasks listed in the periodic task operation table 143 (S10). Herein, the CPU usage rate of each periodic task is obtained from a quotient of the average execution time and the operation period (CPU Usage Rate = Operation Period / Average Execution Time).

In the case of the periodic task operation table 143 illustrated in Fig. 5, the CPU usage rate of the periodic task TPa becomes 10% (100 µs / 1,000 µs = 0.1). The CPU usage rate of the periodic task TPb becomes 10% (200 / 2, 000 = 0.1). The CPU usage rate of the periodic task TPc becomes 15% (75 / 500 = 0.15). Therefore, the sum (value A) of the CPU usage rates of the respective periodic tasks becomes 35% (10% + 10% + 15% = 35%).

The controller 1 calculates a product of (1 - A) and the CPU operating frequency (value B) of the CPU operating frequency table 147, and a value C is obtained (C = B * (1 - A)). The description will be given specifically. The CPU operating frequency (value B) is 1,000 MHz, and the value A is 35%, so that the product (value C) of the value B and the value (1 - A) becomes 650 MHz (1,000 MHz * (100 - 35 / 100) = 650 MHz) (S11).

The controller 1 stores the value C to the operating frequency c1481 of the CPU availability table 148, and stores the value (C/B) to a CPU usage rate C1482 of the CPU availability table 148 (S12).

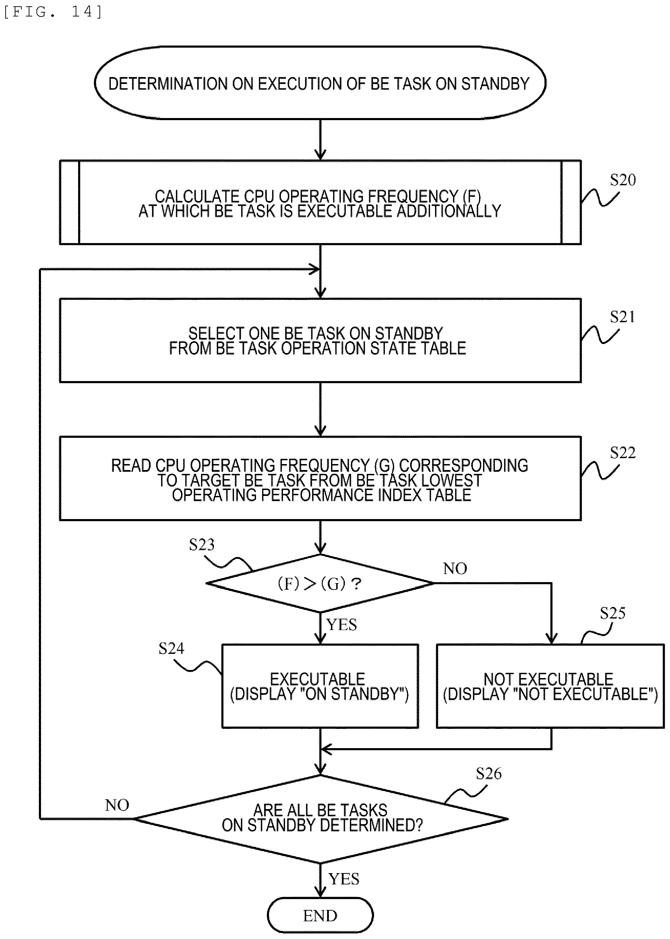

Fig. 14 is a flowchart of a process of determining whether the BE task on standby is executable. The process is executed by the task management unit 130 at the time of drawing of the BE task operation setting screen G10 described using Fig. 17. Hereinbelow, the controller 1 will be described as the operation subject.

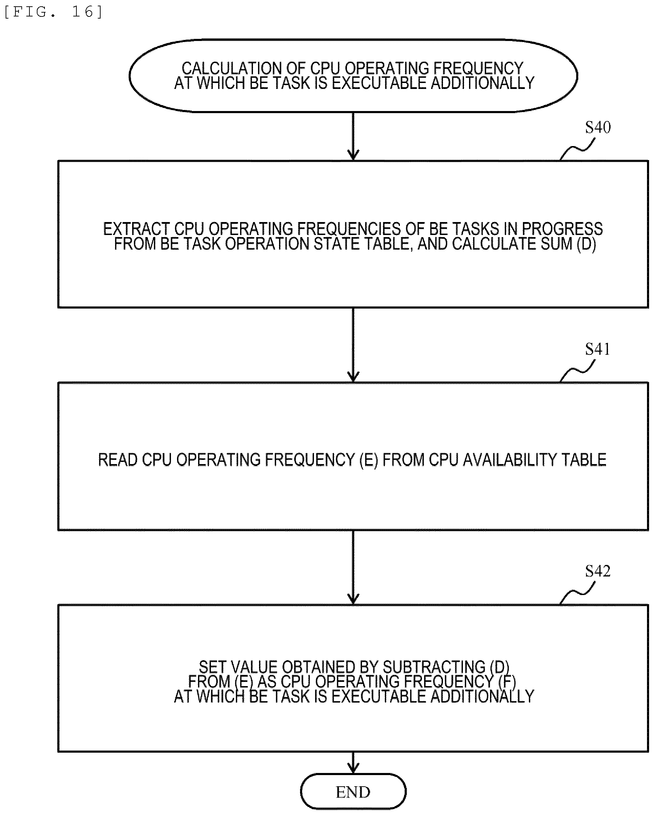

The controller 1 calculates the CPU operating frequency (value F) at which the BE task is additionally executable by the process to be described below using Fig. 16 (S20) . In other words, the controller 1 calculates a remaining resource of the CPU 11.

The controller 1 selects one task of which the operation state C1492 is "on standby" with reference to the BE task operation state table 149 (S21). Hereinbelow, the BE task of which the operation is stopped may be called the BE task on standby.

The controller 1 reads the CPU operating frequency (value G) corresponding to the BE task on standby selected in Step S21 from the column C1463 of the BE task lowest operating performance index table 146 (S22).

The controller 1 compares the value F calculated in Step S20 with the value G read in Step S22, and determines whether the value F is larger than the value G (S23).

In a case where the value F is larger than the value G (S23: YES), the controller 1 determines that the BE task on standby selected in Step S21 is executable, and displays "on standby" on the BE task operation setting screen G10 illustrated in Fig. 17 (S24).

On the contrary, in a case where the value F is equal to or less than the value G (S23: NO), the controller 1 determines that the BE task on standby selected in Step S21 is not executable, and displays "not executable" on the BE task operation setting screen G10 (S25).

The controller 1 executes Step S24 or Step S25, and then checks whether all the BE tasks on standby are determined about whether it is executable (S26). In a case where there is a BE task on standby not yet determined (S26: NO), the controller 1 returns to Step S21 to select one BE task on standby which is not yet determined. In a case where all the BE task on standby listed in the BE task operation state table 149 are determined about whether it is executable (S26: YES), the controller 1 ends the process.

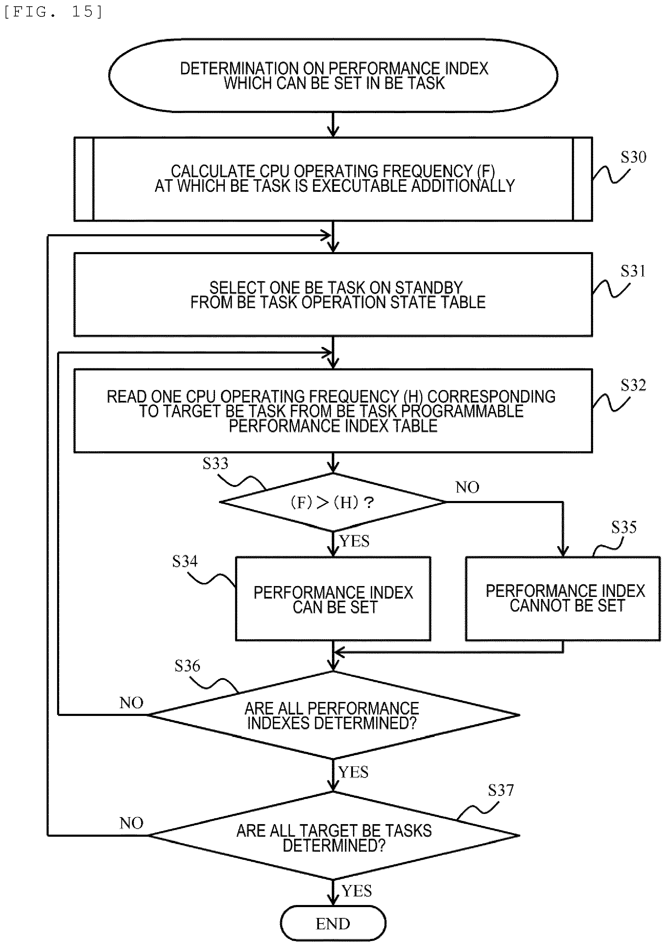

Fig. 15 is a flowchart illustrating a process of determining the performance index which can be set in the BE task. The process is executed by the task management unit 130 when the BE task operation setting screen G10 is created. Herein, the controller 1 will also be described as the operation subject.

The controller 1 calculates the CPU operating frequency (value F) at which the BE task is additionally executable by the process described using Fig. 16 (S30).

The controller 1 selects any one of the BE tasks of which the operation state C1492 is set to any one of "in progress" and "on standby" with reference to the BE task operation state table 149 (S31).

The controller 1 reads one CPU operating frequency (value H) from the CPU operating frequencies C1452 corresponding to the BE task selected in Step S31 with reference to the BE task programmable performance index table 145 (S32).

The controller 1 compares the value F acquired in Step S30 with the value H acquired in Step S32, and determines whether the value F is larger than the value H (S33). In a case where the value F is larger than the value H (S33: YES), the controller 1 determines that the performance index corresponding to the CPU operating frequency selected in Step S32 can be set in the BE task selected in Step S31 (S34).

In a case where the value F is equal to or less than the value H (S33: NO), the controller 1 determines that the performance index corresponding to the CPU operating frequency selected in Step S32 cannot be set in the BE task selected in Step S31 (S35).

The controller 1 executes Step S34 or S35, and then checks whether all the performance indexes related to the BE task selected in Step S31 are determined about whether it can be set for the BE task (S36).

In a case where there is a performance index not yet determined about whether it can be set in the BE task selected in Step S31 (S26: NO), the controller 1 returns to Step S32. The controller 1 selects another CPU operating frequency related to the BE task selected in Step S31 from the operating frequency C1452 of the BE task programmable performance index table 145. Thereafter, the above process is executed. Then, in a case where all the performance indexes related to the BE task selected in Step S31 are determined about whether it can be set (S36: YES), the controller 1 returns to Step S37.

The controller 1 checks whether all the BE tasks of which the operation state C1492 of the BE task operation state table 149 is set to any one of "in progress" and "on standby" are determined (S37).

In a case where there is a BE task not yet determined (S37: NO), the controller 1 returns to Step S31, and selects one BE task of which the operation state C1492 is any one of "in progress" and "on standby" from the BE task operation state table 149. Thereafter, the above process is executed. Then, in a case where all the BE tasks of which the operation state C1492 is set to any one of "in progress" and "on standby" are determined about whether the performance index can be set (S37: YES), the controller 1 ends the process.

Fig. 16 is a flowchart illustrating a process of calculating the CPU operating frequency (value F) at which the BE task is additionally executable.

The controller 1 reads the CPU operating frequencies set to the performance indexes C1493 with respect to all the BE tasks of which the operation state C1492 of the BE task operation state table 149 are "in progress", and calculates a sum (value D) of these frequencies (S40).

The controller 1 reads the CPU operating frequency from the column C1481 of the CPU availability table 148 as a value E (S41). The controller 1 calculates a difference F between the value E acquired in Step S41 and the value D acquired in Step S40 (F = E - D), and sets the difference F as the CPU operating frequency (value F) at which the BE task is additionally executable (S42). In other words, the controller 1 calculates the difference (F) between a total sum of the CPU operating frequencies consumed by the BE task currently in progress and the maximum operating frequency of the CPU 11 as the operating frequency which can be assigned to the execution of a new BE task.

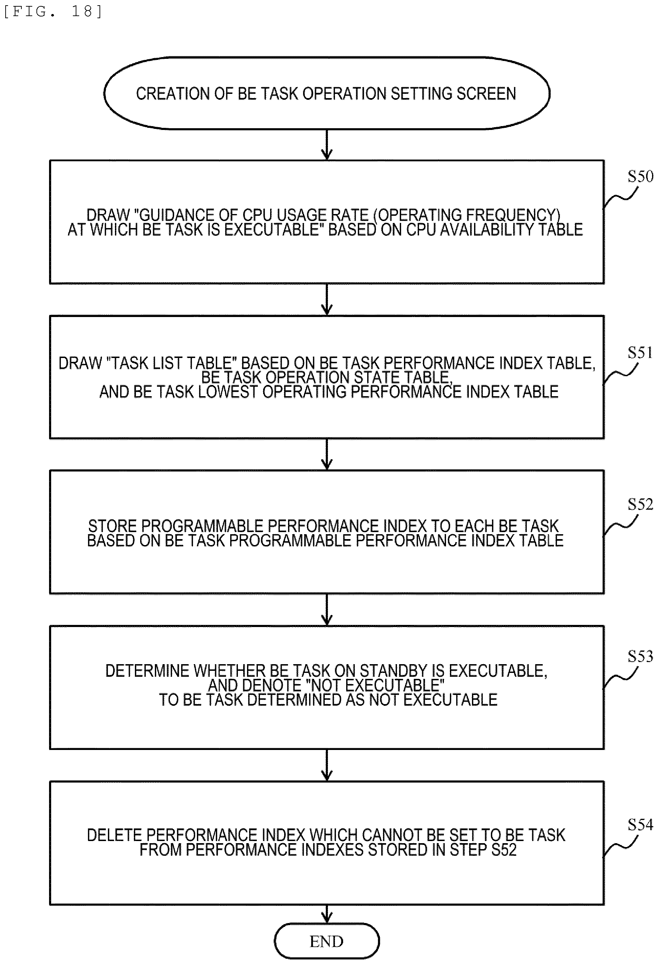

Fig. 17 illustrates an example of the BE task operation setting screen G10. The BE task operation setting screen G10 is provided from the user interface unit 150 to the user. The user interface unit 150 provides the setting screen G10 for the user like a Web page provided by a Web server, for example, and enables information exchange with the user. A process of creating the setting screen G10 will be described below using Fig. 18.

The setting screen G10 includes, for example, a guidance display unit GP10, a task list GP11, a set button GP12, a cancel button GP13, and a notice display unit GP14.

The guidance display unit GP10 is a region to display a guidance of the CPU resource with which the BE task is newly executable. The task list GP11 illustrates a list of the BE tasks which are managed by the controller 1. The task list GP11 lists, for example, "task name", "operation state", "content of performance index", "lowest operating performance index", "lowest operating frequency", "set performance index", and "set operating frequency" in correspondence with each other.

The "task name" is a name for identifying the BE task under the management of the controller 1. The "operation state" indicates an operation state of each BE task. The operation state includes, for example, on standby, in progress, and not executable. The user can change the operation state of the BE task which is "on standby" or "in progress" by a pull-down menu. The "content of performance index" indicates a content of an index to confirm the performance of the BE task. The "lowest operating performance index" is a performance index when the BE task operates at a minimum performance. The "lowest operating frequency" is a CPU operating frequency corresponding to the lowest operating performance index. The "set performance index" is a performance index which is currently set in the BE task. The "set operating frequency" is a CPU operating frequency corresponding to the set performance index. The user can change the performance index which is set in the BE task in progress by the pull-down menu GP16.

In a case where the operation of the BE task is set by an input to the screen G10, the user operates the set button GP12. On the contrary, in a case where the input to the screen G10 is canceled, the user operates the cancel button GP13.

The notice display unit GP14 displays a message for informing the user of a content that the performance index set in the BE task does not ensure the realization thereof, but is merely a guidance.

With the displaying of the BE task operation setting screen G10, the user may know a guidance of the CPU resource which is usable to the BE task. Further, the performance index of the BE task is provided as information with which the performance of each BE task can be intuitively ascertained such as a learning time of the one-day log information, the sampling frequency, the number of sensors, and the frame rate. Therefore, the user can simply set a desired performance index by operating the GUI to the screen G10.

As illustrated in Fig. 12, in a case where the interrupt task occurs, or in a case where the execution time of the periodic task is lengthened, the CPU resource which is usable to the BE task is reduced more than the value shown in the CPU availability table 148. Therefore, the BE task may only exert a performance lower than the programmed performance index. Therefore, the notice display unit GP14 is provided in the BE task operation setting screen G10 to give a notice to the user.

Fig. 18 is a flowchart of a process of creating the BE task operation setting screen G10. The process is executed when the task management unit 130 of the controller 1 draws an image on the BE task operation setting screen G10. Hereinbelow, the controller 1 will be described as the operation subject.

The controller 1 reads the values C1481 and C1482 of the CPU resource with which the BE task is executable with reference to the CPU availability table 148, and draws an image as a guidance of the CPU usage rate (operating frequency) (S50).

The controller 1 draws a table to be displayed in the task list GP11 on the basis of the information listed in the BE task performance index table 144, the BE task operation state table 149, and the BE task lowest operating performance index table 146 (S51).

The controller 1 stores internally the values of a performance index column C1452 which can be set for each BE task with reference to the BE task programmable performance index table 145 (S52). The controller 1 determines whether the BE task on standby can be executed again, denotes "not executable" with respect to the BE task which is determined as not executable among the BE tasks on standby, so as not to be selected by the user (S53).

The controller 1 determines the performance index which can be set for each BE task, and excludes the performance index which cannot be set from the content stored in S52 (S54). With the execution of the above process, the setting screen G10 illustrated in Fig. 17 can be created.

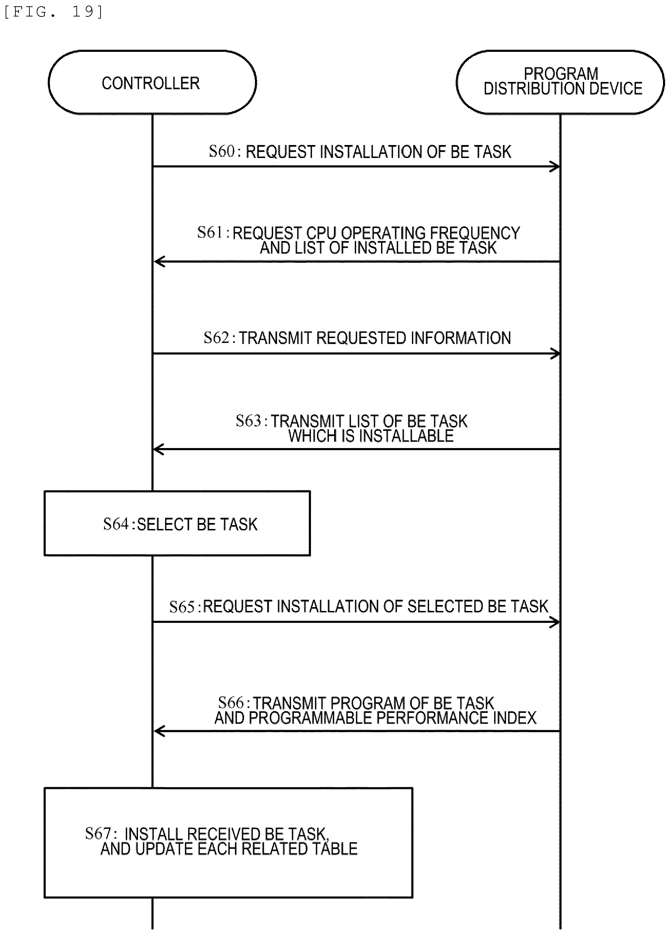

Fig. 19 is a flowchart illustrating a process of installing the BE task to the controller 1. The controller 1 provides an installation screen for installing the BE task to the controller 1 from the user interface unit 150 to the user. The user calls the installation screen (not illustrated) and can request the installation of the BE task.

When an installation instruction is received from the user, the controller 1 is connected to the program distribution device 2, and requests the installation of the BE task designated by the user to the program distribution device 2 (S60).

When receiving the installation request, the program distribution device 2 requests the operating frequency of the CPU 11 and a list of the BE tasks installed in the controller 1 to the controller 1 (S61).

The controller 1 transmits the information of the CPU operating frequency listed in the CPU operating frequency table 147 and the BE task name C1491 listed in the BE task operation state table 149 to the program distribution device 2 (S62).

The program distribution device 2 compares the BE task programmable performance index master table 232 with the list of the CPU operating frequency of the controller 1 and the BE task name, and detects a list of the BE tasks which are installable by the controller 1. The program distribution device 2 transmits the list of the BE tasks which are installable by the controller 1 to the controller 1 (S63).

The controller 1 presents the list of the BE tasks received from the program distribution device 2 to the user through the user interface unit 150. The user selects a desired BE task from the presented BE tasks. A selection result of the user is input from the user interface unit 150 to the controller 1 (S64).

The controller 1 requests the installation of the BE task selected by the user to the program distribution device 2 (S65). The program distribution device 2 transmits a program of the BE task requested from the controller 1 and the information of the performance index which can be set in the BE task toward the controller 1 (S66).

The controller 1 installs the BE task received from the program distribution device 2 to the BE task execution unit 120, and additionally attaches the information of the performance index which can be set in the BE task to each of the BE task performance index table 144, the BE task programmable performance index table 145, the BE task operation state table 149, the BE task lowest operating performance index table 146, and the BE task priority table 142 (S67).

According to the embodiment as configured above, the CPU 11 configured by a single chip and a single core can execute the BE task at a maximum performance using the extra resource in a case where the high priority tasks are not executed while executing the periodic task and the interrupt task by priority. Therefore, the controller device of the embodiment can respectively execute the plurality of tasks according to priority differences without using a microprocessor having a plurality of microprocessors or a plurality of cores. Further, the configuration of the device is simplified, so that a manufacturing cost can be reduced.

In the embodiment, an index is presented to the user as a guidance of the execution performance of the BE task. Therefore, the user can check in advance at which performance the BE task is executed, so that usability is improved. Further, in the embodiment, the performance index, such as the time, the number of sensors, the frequency, and the frame rate, easily identified according to the nature of the BE task is presented to the user. Therefore, even an inexperienced user can also intuitively ascertain the performance of the BE task.

Further, in the embodiment, the performance index of the BE task is informed as a guidance through the notice display unit GP14 of the BE task operation setting screen G10. Therefore, it is possible to prevent the user from misunderstanding before it happens, so that the usability is improved.

### [Second Embodiment]

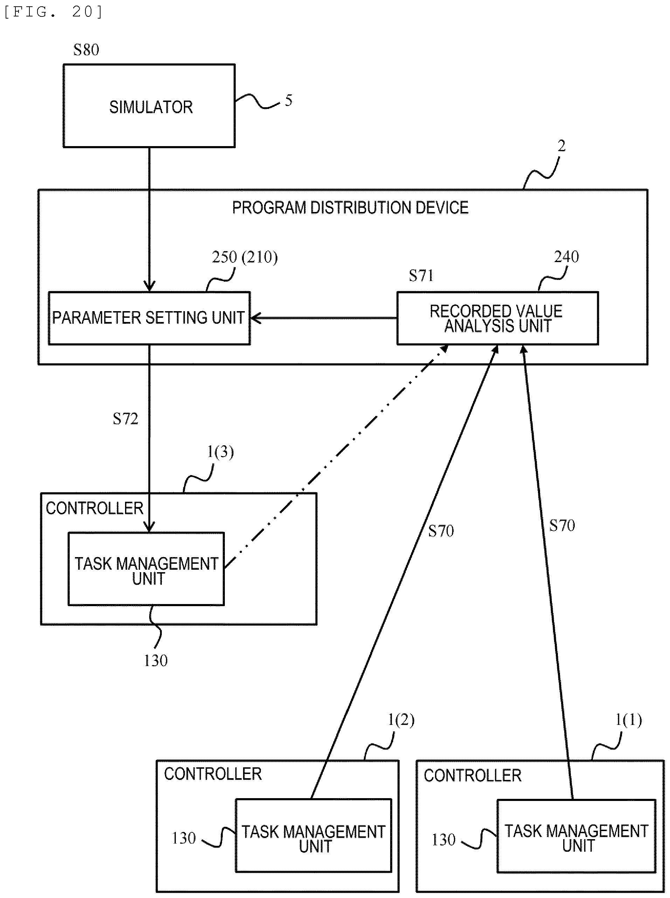

A second embodiment will be described using Fig. 20. The following embodiments including the embodiment correspond to modifications of the first embodiment, and thus the description will be given focusing on differences from the first embodiment. In the embodiment, some methods of setting the average execution time of the BE task to the controller 1 will be described.

Fig. 20 is a diagram illustrating the entire control system. The program distribution device 2 is connected to a plurality of controllers 1(1) to 1(3). Then, the controllers 1(1) to 1(3) may be installed in the same work place, or may be installed in different work places. Herein, it is assumed that the controllers 1(1) and 1(2) are already installed, and the controller 1(3) is newly installed. Further, not only the new installation of the controller 1, but also a case where the configuration of the control system managed by the controller 1 is changed, or in a case where the user instructs an update, the following process may be executed.

The program distribution device 2 of the embodiment includes a recorded value analysis unit 240 and a parameter setting unit 250 in addition to the configuration described in the first embodiment.

The recorded value analysis unit 240 collects (S70) and analyzes (S71) the average execution time of the periodic task and an operation parameter of the BE task from the task management unit 130 of the plurality of controllers 1(1) and 1(2). The recorded value analysis unit 240 statistically processes the execution records of each task in the plurality of controllers 1(1) and 1(2), so that it is possible to obtain an estimation value with more accuracy.

The parameter setting unit 250 transmits an analysis result of the recorded value analysis unit 240 to the task management unit 130 of the controller 1(3) which is an update target, and updates the average execution time of the periodic task and the operation parameter of the BE task (for example, the lowest operating performance index) (S72). Various parameters initially set in the newly installed controller 1(3) are updated with the latest values calculated by the recorded value analysis unit 240. The function of the parameter setting unit 250 may be executed by the task distribution management unit 210.

Instead of the method of statistically processing the recorded value in the existing controllers 1(1) and 1(2), or together with the statistical processing, a simulator 5 may be used. The simulator 5 tests the execution of each task in advance under an environment for simulating an operating environment for each task, and adjusts the parameters of each task (S80). The parameter setting unit 250 updates the parameters of each task of the target controller 1(3) according to a result of the simulator 5.

The embodiment configured as above also achieves the operational effects similar to those of the first embodiment. Further, in the embodiment, the parameters of each task of the controller 1 can be updated, so that the availability of the CPU 11 can be calculated with more accuracy, and the performance index of the BE task can be realized with high accuracy.

The control system equipped with the controller 1 does not always operate constant, but may be changed due to a secular change of the control target device 3. In addition, a condition or an ambient environment of a site where the control system is installed is also changed. Therefore, a time taken for executing each task is changed.

In addition, the BE task may be created using a so-called open source program. Therefore, the program can be appropriately modified for the purpose of a security countermeasure. The executing performance of the BE task is changed according to the modification of the program. In the embodiment, the operation of the BE task with the modified program can be checked by the simulator 5 in advance, and the parameters may be changed as needed. Therefore, it is possible to increase a reliability of the BE task, and usability is improved.

### [Third Embodiment]

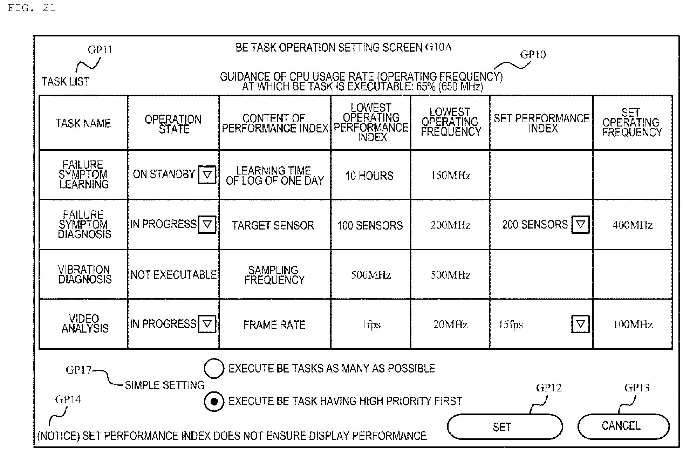

A third embodiment will be described using Fig. 21. In the embodiment, the operation of the BE task can be simply set by the user. Fig. 21 illustrates an example of a BE task operation setting screen G10A of the embodiment.

The screen G10A of the embodiment includes a simple setting unit GP17. The simple setting unit GP17 automatically sets the operation of the BE task according to a request selected by the user. In the simple setting unit GP17, for example, the user may select a condition such as "Execute BE tasks as many as possible" and "Execute BE task having high priority first".

In order to satisfy "Execute BE tasks as many as possible", for example, the BE task may be selected in an ascending order of the CPU operating frequency which is necessary for the execution until a total value of the CPU operating frequencies of the selected BE tasks is matched with the value of an available CPU operating frequency (until two values are closest as long as not exceeding the value of the available CPU operating frequency).

In addition, in order to satisfy "Execute BE task having high priority first", for example, the BE task may be selected in an descending order of the priority and in an ascending order of the CPU operating frequency which is necessary for the execution until a total value of the CPU operating frequencies of the selected BE tasks is matched with the value of an available CPU operating frequency (until two values are closest as long as not exceeding the value of the available CPU operating frequency).

The task management unit 130 automatically sets a detailed content of a BE task operation setting unit G10A according to a selection result acquired from the simple setting unit GP17, and presents the BE task operation setting unit G10A to the user.

The embodiment configured as above also achieves the operational effects similar to those of the first embodiment. Further, in the embodiment, with the simple setting unit GP17, even an inexperienced user can also set the operation of the BE task to a desired value. In the embodiment, the intuitive displaying of the performance index related to the BE task and the simple setting unit GP17 for easily setting the operation of the BE task are combined, so that the usability of the user is improved still more.

### [Fourth Embodiment]

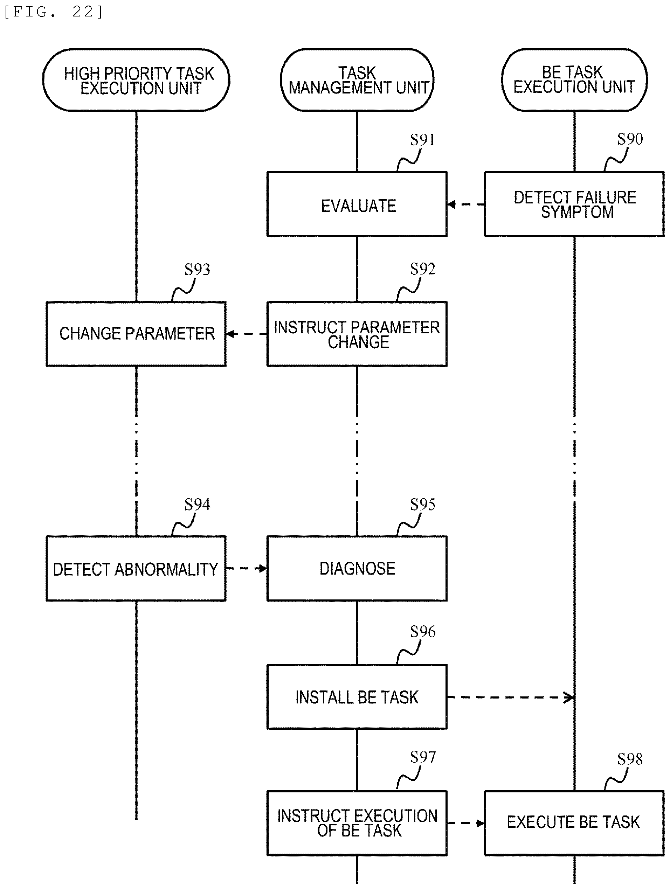

A fourth embodiment will be described using Fig. 22. In the embodiment, the description will be given about a case where the BE task and the high priority task cooperate with each other. Fig. 22 is a flowchart illustrating an example of an interaction between the BE task and the high priority task (the periodic task and the interrupt task) in cooperation with each other.

An example that an execution result of the BE task operates on the high priority task will be described. When detecting a symptom of a failure, the BE task execution unit 120 informs the task management unit 130 (S90). The task management unit 130 evaluates whether to deal with the failure symptom, and evaluates whether to change the parameter in the case of dealing with the failure symptom (S91). In a case where the task management unit 130 evaluates to deal with the failure symptom, the task management unit 130 instructs the high priority task execution unit 110 to update the parameter (S93).

For example, in a case where a failure symptom is detected, parameters of the periodic task such as setting values such as a setting temperature and a setting pressure or the operation period are changed, so that the possibility of the failure can be lowered, and a time to cause the failure can be extended. In a case where the operation period of the periodic task is lowered, the performance at the time of executing the BE task can be increased. Therefore, a frequency and accuracy of the process such as the failure symptom can be increased still more.

As illustrated on the lower side of Fig. 22, when any abnormalities are detected, the high priority task execution unit 110 notifies the task management unit 130 (S94). The task management unit 130 diagnoses the detected abnormality, and determines whether there is a need to execute the BE task (S95). For example, in a case where an abnormal sound is detected, the task management unit 130 determines whether to activate a failure symptom diagnosis BE task or a vibration diagnosis task.

The task management unit 130 determines whether to install the BE task to be executed. In a case where the BE task is not installed, the BE task execution unit requests the installation to the program distribution device 2 (S96). The process has been described using Fig. 19, and thus the description thereof is omitted herein.

The task management unit 130 instructs the BE task execution unit 120 to execute the BE task to be executed (S97). The BE task execution unit 120 executes the instructed BE task.

With this configuration, in the embodiment, the same operational effects as those of the first embodiment can be achieved, and the BE task and the high priority task can cooperate with each other, so that the reliability of the controller 1 can be increased.

Further, the invention is not limited to the above embodiments. A person skilled in the art could make various additions and changes within the scope of the invention. In the above embodiments, the invention is not limited to the exemplary configurations illustrated in the attached drawings. The configurations and processing methods of the embodiments can be appropriately changed within a scope to attain the object of the invention.

In addition, the respective components of the invention may be selected arbitrarily, and an invention equipped with the arbitrarily selected configuration would fall within the scope of the invention. The configurations disclosed in claims may be combined in a certain manner other than the combination specified in claims.

The embodiments may be expressed as follows.

"A computer program for executing a controller device equipped with a single microprocessor to execute one or more first tasks set to a high priority and one or more second tasks set to a low priority one by one at a time, including
calculating an extra resource assignable to the execution of the second task among calculation processing resources of the microprocessor;
determining a performance index indicating an estimated value of performance of the second task in a case where the second task is executed using the calculated extra resource; and
outputting the extra resource and the performance index"

"A control system, including:
a controller device which executes a plurality of tasks having different priorities; and
a program distribution device which distributes the task to the controller device,
wherein the controller device includes
a single microprocessor which executes one task at a time,
a first task execution unit which is realized by the microprocessor, and executes one or more first tasks set to a high priority,
a second task execution unit which is realized by the microprocessor, and executes one or more second tasks set to a low priority, and
a task management unit which calculates an extra resource assignable to execution of the second task among calculation processing resources of the microprocessor, determines a performance index indicating an estimated value of performance of the second task in a case where the second task is executed using the calculated extra resource, and outputs the extra resource and the performance index, and
wherein the program distribution device transmits and installs the second task requested from the controller device and information required for the installation of the second task to the controller device."

### Reference Signs List

- 1:: controller
- 2:: program distribution device
- 3:: control target device
- 31:: sensor
- 32:: actuator
- 110:: high priority task execution unit
- 120:: BE task execution unit
- 130:: task management unit
- 140:: memory unit
- 150:: user interface unit
- 210:: task distribution management unit
- 220:: database management unit
- 230:: memory unit

## Claims

1. A controller device which executes a plurality of tasks having different priorities, comprising:
a single microprocessor which executes one task at a time;
a first task execution unit which is realized by the microprocessor, and executes one or more first tasks set to a high priority;
a second task execution unit which is realized by the microprocessor, and executes one or more second tasks set to a low priority; and
a task management unit which calculates an extra resource assignable to execution of the second task among calculation processing resources of the microprocessor, determines a performance index indicating an estimated value of performance of the second task in a case where the second task is executed using the calculated extra resource, and outputs the extra resource and the performance index.

2. The controller device according to claim 1, wherein
the first task is executed using the calculation processing resource in priority, and
the second task is executed using the extra resource.

3. The controller device according to claim 2, wherein
the first task is a process which is directly associated with a control target device which is a control target of the microprocessor, and is executed using the calculation processing resource in priority, and
the second task is a process which is indirectly associated with the control target device, and is executed using the extra resource.

4. The controller device according to claim 3, wherein
the extra resource is calculated on the basis of an idle time during which the first task is not executed among the calculation processing resources.

5. The controller device according to claim 4, wherein
the first task includes a periodic task which is periodically executed, and an interrupt task which is interposed into a task in progress and executed by the microprocessor, and
the extra resource is calculated from a difference between a time when the periodic task uses the calculation processing resource and all the calculation processing resources in a case where the interrupt task does not occur.

6. The controller device according to claim 5, wherein
the extra resource is displayed and output using at least any one of a usage rate of the microprocessor and an operating frequency.

7. The controller device according to claim 6, wherein
the performance index is selected among a plurality of values which are prepared in advance on the basis of any one of the usage rate of the microprocessor and the operating frequency.

8. The controller device according to claim 6, wherein
the task management unit outputs the performance index and the usage rate of the microprocessor or the operating frequency in correspondence with each other.

9. The controller device according to claim 8, wherein
the task management unit outputs a set performance index which is a performance index value set to the second task, the usage rate of the microprocessor or a value of a drive frequency corresponding to the set performance index, an lowest operating performance index which is a performance index value required for the second task to be operated at a minimum performance, and the usage rate of the microprocessor or a value of a drive frequency corresponding to the lowest operating performance index in correspondence with each other.

10. The controller device according to claim 9, wherein
the task management unit is also capable of outputting an operation state of the second task, and
the operation state includes "in progress", "on standby", and "not executable".

11. The controller device according to claim 10, wherein
the task management unit is configured to
compare the determined performance index with the extra resource,
select "on standby" as the operation state of an executable second task, and display and output the selected state to receive an execution instruction from a user, and
select "not executable" as the operation state of an inexecutable second task, and display and output the selected state not to receive the execution instruction from the user.

12. The controller device according to claim 11, wherein
the task management unit displays and outputs the second task of which the operation state is "in progress" to receive an instruction of changing the set performance index from the user.

13. The controller device according to any one of claims 1 to 12, wherein
the task management unit changes at least some of parameters when the first task execution unit executes the first task on the basis of an execution result of the second task execution unit.

14. The controller device according to claim 13, wherein
the task management unit determines the second task executed by the second task execution unit on the basis of an execution result of the first task execution unit.

15. A task execution managing method in which a plurality of tasks having different priorities are executed by a controller device, wherein
the controller device includes a single microprocessor which executes one task at a time,
the tasks include one or more first tasks set to a high priority and one or more second tasks set to a low priority, and
the controller device is configured to
calculate an extra resource assignable to the execution of the second task among calculation processing resources of the microprocessor,
determine a performance index indicating an estimated value of performance of the second task in a case where the second task is executed using the calculated extra resource, and
output the extra resource and the performance index.
